# EUROPÄISCHE PATENTSCHRIFT

(11) **EP 3 409 589 B1**
(45) Veröffentlichungstag und Bekanntmachung des Hinweises auf die Patenterteilung: **29.04.2020**
(21) Anmeldenummer: 18174786.6
(22) Anmeldetag: 29.05.2018
(51) Int. Cl.: B64D 27/24, B64C 27/12

(54) **ANTRIEBSSYSTEM FÜR EIN FAHRZEUG**
DRIVE SYSTEM FOR A VEHICLE
SYSTÈME D'ENTRAÎNEMENT POUR UN VÉHICULE

(30) Priorität: 31.05.2017 DE 102017111911
(43) Veröffentlichungstag der Anmeldung: 05.12.2018
(73) Patentinhaber: Brunner, Dirk, 81241 München (DE)
(72) Erfinder: Brunner, Dirk, 81241 München (DE)
(74) Vertreter: Rösler Rasch van der Heide & Partner

(56) Entgegenhaltungen:
- EP-A2- 0 293 173
- WO-A1-2018/045253
- CN-U- 207 120 881
- US-A- 5 110 314
- US-A1- 2016 083 077

## Beschreibung

Die Erfindung betrifft ein Antriebssystem für ein Fahrzeug, umfassend mindestens einen asymmetrischen Rotor, der mindestens ein von einer Rotorachse radial sich erstreckendes Rotorblatt und ein bezüglich der Rotorachse gegenüberliegendes Ausgleichsgewicht aufweist, ferner umfassend eine Ansteuervorrichtung für den Elektromotor, die den Elektromotor mit einem Akkumulator zu dessen Energieversorgung verbindet. Die Erfindung betrifft ferner ein damit ausgestattetes Luft- und Wasserfahrzeug.

Aus der US 5 110 314 A ist eine derartige Vorrichtung bekannt, bei welcher der Rotor eine Beschleunigungsphase, in welcher der Elektromotor zur Beschleunigung des Rotors beschleunigbar ist und eine Bremsphase, in welcher der Elektromotor bremsbar ist, aufweist, wobei die positiven bzw. negativen Beschleunigungen dazu dienen, ein flexibles Rotorblatt elastisch zu deformieren und damit den Anstellwinkel und die Auftriebsrichtung zu verändern.

Die Aufgabe der Erfindung ist es, ein gattungsgemäßes Antriebssystem für ein Fahrzeug sowie ein damit ausgestattetes Luft- und Wasserfahrzeug bereitzustellen, das eine Steuerung des Fahrzeuges ohne zusätzliche Steuerungsmittel ermöglicht und zugleich energieeffizient arbeitet.

Die Erfindung ergibt sich aus den Merkmalen von Anspruch 1 und Anspruch 5. Vorteilhafte Weiterbildungen und Ausgestaltungen sind Gegenstand der abhängigen Ansprüche.

Die Erfindung ermöglicht durch die positive bzw. negative Beschleunigung des einseitig wirkenden Rotorblattes eine gezielte Erhöhung oder Erniedrigung der durch das Rotorblatt erzeugten Schubkraft und damit eine Veränderung der insgesamt während eines Umlaufzyklusses wirkenden Kraftrichtung. Damit kann ein Moment um eine durch die Drehebene des Rotors gehende Achse erzeugt werden und ein mit dem Antriebssystem ausgestattetes Fahrzeug gezielt gesteuert werden. Insbesondere, wenn das Fahrzeug ein Hubschrauber oder eine Hubschrauberdrohne ist, kann dieses in Richtungen gelenkt oder gekippt werden, die mittels herkömmlicher Antriebssysteme ohne Pitchverstellung nicht möglich sind.

Um die beim Abbremsvorgang anfallende Energie zu nutzen, wird während dieser Phase ein Akkumulatorelement angeschlossen, wobei der Elektromotor als Generator wirkt. Wenn eine stärkere Bremswirkung gewünscht wird, ist es auch möglich, den Elektromotor während eines Teils der Bremsphase vollständig kurzzuschließen oder in umgekehrter Polung an den zur Energieversorgung dienenden Akkumulator anzuschließen.

Gemäß einer vorteilhaften Weiterbildung der Erfindung umfasst der Akkumulator mindestens zwei Akkumulatorelemente und eine Akkumulator-Beschaltungsvorrichtung, um jedes Akkumulatorelement einzeln zu beschalten. Hierdurch ist es möglich, die Energieversorgung des Elektromotors mit größter Flexibilität zu gestalten. Es ist insbesondere möglich, durch Hinzuschalten eines zusätzlichen Akkumulatorelements die Betriebsspannung des Elektromotors für die Beschleunigungsphase zu erhöhen. Während der Bremsphase können eines oder mehrere der Akkumulatorelemente beschaltet werden, die dabei geladen werden, nachdem der Elektromotor dann im Generatorbetrieb arbeitet.

Gemäß einer vorteilhaften Weiterbildung der Erfindung umfasst der Umlaufzyklus zwei Umläufe. Vorzugsweise fällt die Beschleunigungsphase in einen Umlauf und die Bremsphase in einen zweiten, darauffolgenden Umlauf des Rotors.

Gemäß einer vorteilhaften Weiterbildung der Erfindung ist die Beschaltungsvorrichtung eingerichtet, die Akkumulatorelemente während der Bremsphase zyklisch zu beschalten. Auf diese Weise wird eine gleichmäßige Verteilung der im Generatorbetrieb des Elektromotors gewonnenen Energie auf die verfügbaren Akkumulatorelemente und damit ein gleichmäßiger Ladungszustand sichergestellt. Vorzugsweise umfasst jedes Akkumulatorelement eine eigene Einrichtung zur Ermittlung des Ladungszustandes und gemäß einer vorteilhaften Weiterbildung kann die Beschaltungsvorrichtung auch gezielt Akkumulatorelemente mit einem geringeren Ladungszustand öfter beschalten.

Gemäß einer vorteilhaften Weiterbildung der Erfindung ist die Beschaltungsvorrichtung eingerichtet, die Akkumulatorelemente in der Beschleunigungsphase in Reihe zu schalten. Auf diese Weise wird eine ausreichende Betriebsspannung für den Elektromotor gewährleistet.

Gemäß einer vorteilhaften Weiterbildung der Erfindung umfasst das Antriebssystem einen die Spannung erhöhenden Spannungswandler (Booster), der in der Bremsphase in den Stromkreis schaltbar ist und die Ladespannung der Akkumulatorelemente erhöht. Damit ist auch beim Bremsvorgang eine hinreichend hohe Ladespannung für die Akkumulatorelemente vorhanden. Es ist auch möglich, den Spannungswandler nur in bestimmten Zuständen in den Stromkreis zu schalten oder so auszubilden, dass die erzeugte erhöhte Ausgangsspannung variabel ist. Insbesondere liegt die Eingangsspannung des Spannungswandlers im Bereich 0,5 V bis 5 V und die Ausgangsspannung liegt im Bereich 8 V bis 25 V.

Die Erfindung umfasst ferner ein Luftfahrzeug mit mindestens einem vorher beschriebenen Antriebssystem. Vorzugsweise handelt es sich bei dem Luftfahrzeug um einen Tragflügler / Hubschrauber bzw. eine Drohne.

Gemäß einer vorteilhaften Weiterbildung der Erfindung umfasst dieses Luftfahrzeug einen herkömmlichen symmetrischen Mehrblatt-Rotor sowie ein Antriebssystem gemäß der vorliegenden Erfindung.

Gemäß einer alternativen Weiterbildung der Erfindung umfasst das Luftfahrzeug zwei Antriebssysteme gemäß der vorliegenden Erfindung, wobei sich die Rotoren der beiden Antriebssysteme gegensätzlich drehen und deren zwei Ansteuervorrichtungen die jeweiligen Beschleunigungsphasen und Bremsphasen der beiden Rotoren derart gleichphasig ansteuern, so dass sich die Drehmomente im Wesentlichen aufheben.

Gemäß einer vorteilhaften Weiterbildung der Erfindung ist mindestens ein Teil des Rotorblattes aus der Rotationsebene weg vom Schwerpunkt des Luftfahrzeugs in einem Knickwinkel von mehr als 10° geknickt, um im Fall einer vertikalen Drehachse des Rotors eine radiale Schubkomponente zu erzeugen. Bevorzugt liegt der Knickwinkel zwischen 20° und 60°.

Gemäß einer vorteilhaften Weiterbildung dieser Ausführung ist das Rotorblatt an einem Schaft befestigt und der Knick befindet sich am Übergang zwischen Rotorblatt und Schaft. Das bedeutet, dass das gesamte Rotorblatt gegenüber der Rotationsachse geneigt ist und eine radial nach außen gerichtete oder nach innen gerichtete Schubkomponente erzeugt.

Besonders bevorzugt ist der Knickwinkel so gewählt, dass dessen Verlängerung durch den Schwerpunkt des Luftfahrzeugs geht. Auf diese Weise bewirkt die durch den Knick erzeugte Kraftkomponente das größte Drehmoment.

Gemäß einer alternativen Ausbildung kann das Antriebssystem auch zum Antrieb eines Wasserfahrzeugs verwendet werden. Und auch bei dieser Ausbildung eignet sich eine Form des Rotorblattes mit einem Knickwinkel.

Gemäß einer vorteilhaften Weiterbildung erfolgt die Fixierung des Elektromotors an einem Strukturbauteil des Fahrzeugs über ein Gelenk. Dadurch ist es möglich, bei Beibehaltung der Orientierung bzw. Lage des Rumpfes den Kraftvektor des Rotorblattes zu verändern. Bei einem Drehflügler kann also ohne Kippen des Rumpfes ein Vortrieb erzeugt werden. Bei einem Flugzeug kann der Kurvenradius bei Kurven verkleinert werden. Bei einem Wasserfahrzeug kann ein Ruder verkleinert oder weg gelassen werden.

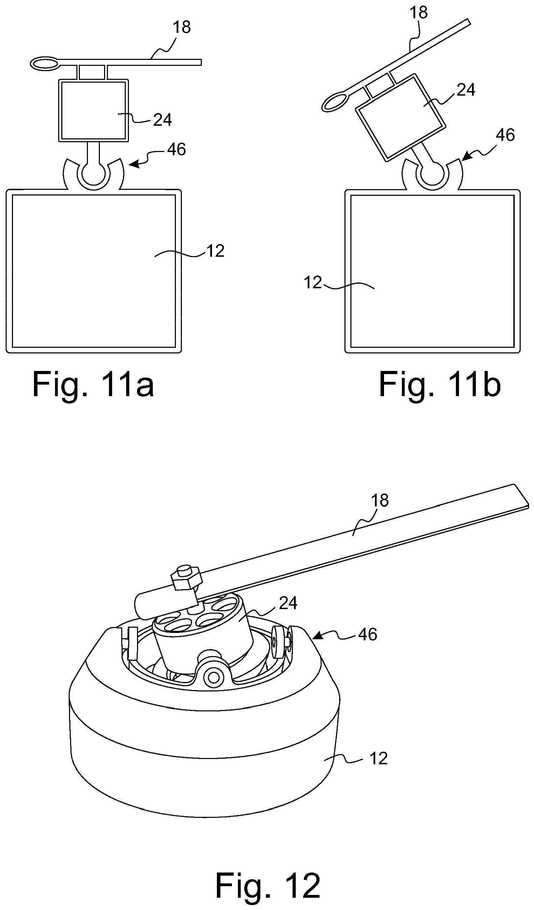

Gemäß einer vorteilhaften Weiterbildung dieser Ausführung ist das Gelenk als 2-achsiges Kreuzgelenk ausgebildet. Wenn das Gelenk als zweiachsiges Gelenk ausgebildet ist, kann eine Ausrichtung der Propellerachse um bis zu 180 ° (siehe Fig. 11B - mehr wie 180 ° funktioniert nicht) verändert werden.

Weitere Vorteile, Merkmale und Einzelheiten ergeben sich aus der nachfolgenden Beschreibung, in der - gegebenenfalls unter Bezug auf die Zeichnungen - zumindest ein Ausführungsbeispiel im Einzelnen beschrieben ist. Gleiche, ähnliche und/oder funktionsgleiche Teile sind mit gleichen Bezugszeichen versehen.

Es zeigen:
- Figur 1:: eine perspektivische Darstellung einer ersten Ausführung eines Luftfahrzeugs;
- Figur 2:: drei schematische Darstellungen von Ausführungsformen verschiedener Luftfahrzeuge;
- Figur 3:: drei verschiedene Beschaltungszustände einer Beschaltungsanordnung;
- Figur 4:: drei verschiedene Beschaltungszustände einer weiteren Beschaltungsanordnung mit einem Booster;
- Figur 5:: zwei Diagramme der Leistung und Drehzahl über dem Drehwinkel 0-360°;
- Figur 6:: zwei Diagramme der Leistung und Drehzahl über dem Drehwinkel 0-720°;
- Figur 7:: eine perspektivische Darstellung einer zweiten Ausführung eines Luftfahrzeugs;
- Figur 8:: eine Darstellung eines asymmetrischen Doppelpropellers;
- Figur 9:: eine perspektivische Darstellung eines Antriebs für ein Flugzeug;
- Figur 10:: eine perspektivische Darstellung eines Antriebs für ein Wasserfahrzeug;
- Figur 11a,b:: zwei Stellungen eines Fahrzeugs mit Antriebssystem und einem Gelenk;
- Figur 12:: eine perspektivische Ansicht eines Gelenks;
- Figur 13:: eine perspektivische Darstellung eines Flugzeuges mit einem Gelenk.

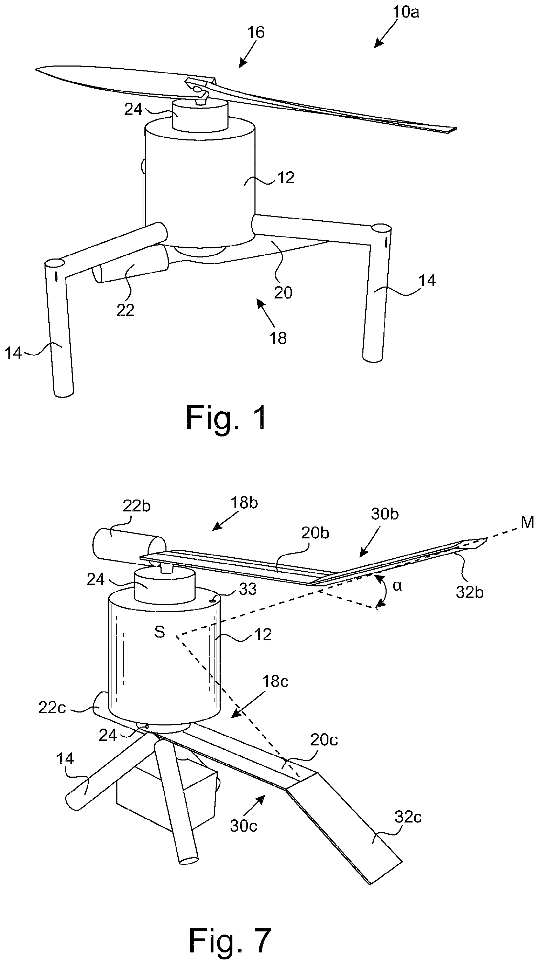

In Figur 1 ist eine perspektivische Darstellung einer ersten Ausführung eines Luftfahrzeugs 10a dargestellt. Dieses umfasst einen zylindrischen Rumpf 12, an dem drei am Umfang verteilte Stützen 14 angebracht sind, von denen nur zwei zu erkennen sind. Aus dem zylindrischen Rumpf 12 ragt oben eine Drehachse, an der ein herkömmlicher, symmetrischer Rotor 16 mit zwei Rotorblättern angebracht ist. Unterhalb des zylindrischen Rumpfes 12 ist ein asymmetrischer Rotor 18 - nachstehend auch Vektorpropeller genannt - angebracht, der aus einem Rotorblatt 20 und einem Ausgleichsgewicht 22 besteht, wobei diese beiden Bestandteile so aufeinander abgestimmt sind, dass sich bei Drehung des asymmetrischen Rotors 18 die Fliehkräfte ausgleichen. Die zwei Elektromotoren zum Antrieb der beiden Rotoren 16, 18 sind unterhalb des Rotors 16 bzw. über dem Rotor 18 als Zylinder dargestellt. Im Inneren des Rumpfes 12 befinden sich Akkumulatoren für die Elektromotoren und sonstige Steuerungs- und Kontrolleinrichtungen.

Im Betrieb dient der symmetrische Rotor 16 zur Erzeugung der nötigen Schubkraft, um das Luftfahrzeug 10a in die Luft zu heben, und der asymmetrische Rotor 18 dient teilweise dem gleichen Zweck aber auch der Steuerung des Luftfahrzeugs 10a.

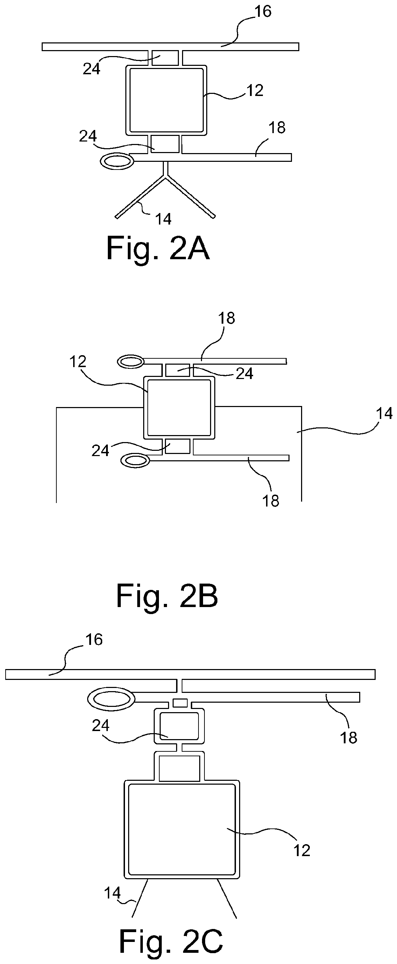

In Figuren 2a, 2b, 2c sind drei schematische Darstellungen von Ausführungsformen verschiedener Luftfahrzeuge dargestellt. Figur 2a zeigt die Ausführung von Figur 1 mit geringfügig abweichenden Stützen 14. Diese Stützen 14 werden durch eine Hohlwelle des unteren Motors geführt. Figur 2b zeigt eine Ausführungsform mit zwei asymmetrischen Rotoren 18. Die beiden Rotoren werden gegeneinander rotierend angetrieben. Vorteilhaft ist der Rotorumlauf beider Rotoren synchronisiert angetrieben, so dass sich durch die gegenläufigen Drehrichtungen der beiden Rotoren die Momente nahezu aufheben. Insbesondere kann ein Rotor beschleunigen während der andere Rotor abgebremst wird. Dadurch wird die benötigte Energie zum Beschleunigen des Rotors teilweise aus dem gebremsten Rotor verwendet.

In Figur 2c ist eine dritte Ausführungsform eines Luftfahrzeugs dargestellt, das weitgehend der Ausführungsform von Figur 1 bzw. Figur 2a entspricht, also einen symmetrischen sowie einen asymmetrischen Rotor aufweist, mit dem Unterschied, dass diese beiden Rotoren 16, 18 direkt übereinander oberhalb des Rumpfes 12 angeordnet sind. Der obere Motor besitzt eine Hohlwelle.

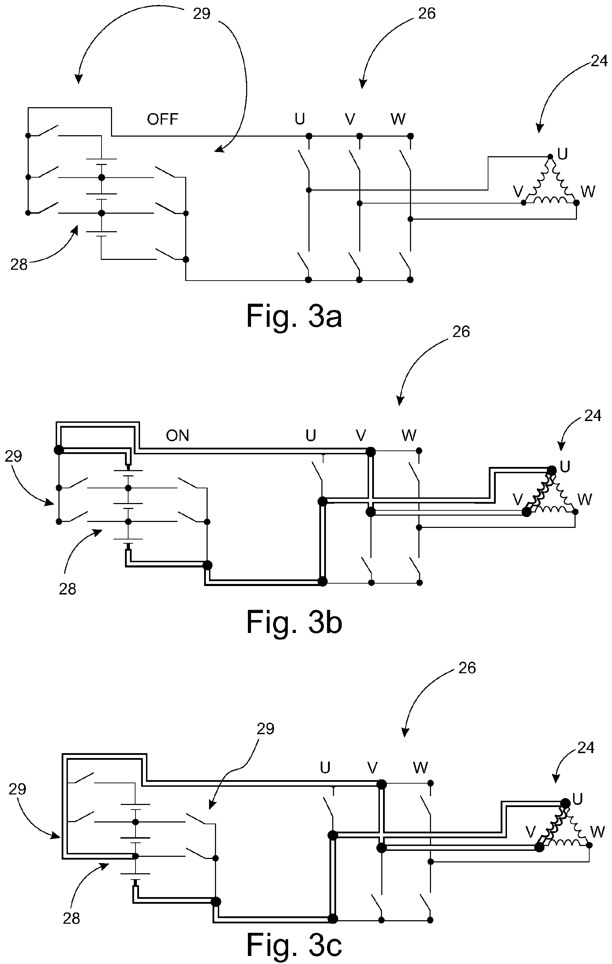

In den Figuren 3a, 3b, 3c sind drei Schaltstellungen einer Schaltungsanordnung dargestellt. Bezugnehmend auf Figur 3a ist ein dreiphasiger bürstenloser Elektromotor 24 mit drei Spulen dargestellt, der über eine erste Schaltvorrichtung 26 mit drei in Reihe geschalteten Akkumulatorelementen 28 verbindbar ist. Ferner ist eine zweite Schaltvorrichtung 29 vorgesehen, welche jedes einzelne der Akkumulatorelemente 28 beschalten kann. Mittels einer nicht dargestellten Sensoreinrichtung, die die Phasenlage des Elektromotors 24 und des damit starr verbundenen Rotors 16 oder 18 erfasst, werden die Schalter der Schaltvorrichtungen 26 und 29 im normalen Flugbetrieb so geschaltet, dass stets eine der drei Spulen des Elektromotors 24 hauptsächlich mit Energie versorgt wird. Bei der in Figur 3a gezeigten Schaltstellung ist die Schaltvorrichtung 29 derart geschaltet, dass keines der Akkumulatorelemente 28 mit dem Elektromotor 24 verbunden ist, so dass dieser nicht angetrieben ist. Bei der in Figur 3b gezeigten Stellung ist die Schaltvorrichtung 29 so geschaltet, dass alle Akkumulatorelemente 28 mit dem Elektromotor 24 verbunden sind und diesen antreiben. Es sei angemerkt, dass nicht dargestellte zusätzliche hinlänglich bekannte Beschaltungselemente vorgesehen werden können, um die Drehzahl des Elektromotors 24 zu verändern. In Figur 3c ist eine Energierückgewinnungsstellung gezeigt, bei der von den drei dargestellten Akkumulatorelementen 28 die oberen zwei überbrückt und nur das unterste Akkumulatorelement 28 mit dem Elektromotor 24 verbunden ist. Da dessen Spannung für die Drehzahl des Elektromotors 24 zu niedrig ist, arbeitet dieser damit automatisch im Generatorbetrieb, wird abgebremst und lädt dabei dieses angeschlossene Akkumulatorelement 28 auf.

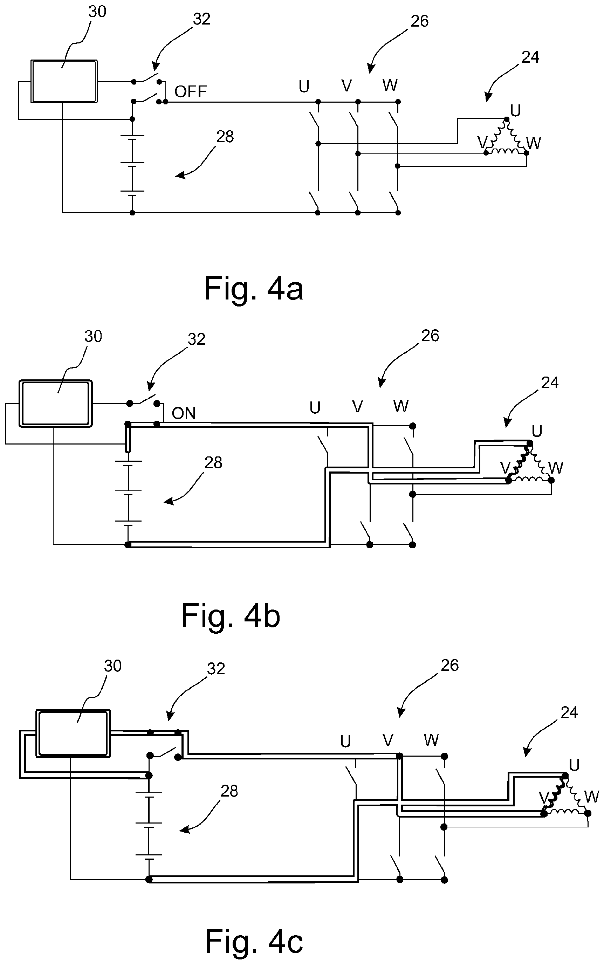

In den Figuren 4a, 4b, 4c sind in einer alternativen Ausführungsform mit einem Spannungswandler 30, der die Eingangsspannung in eine höhere Ausgangsspannung wandelt, dargestellt. Es werden drei Schaltzustände zwischen den Akkumulatoren und Elektromotor dargestellt. Die Bestandteile sind (bis auf die fehlende zweite Schaltvorrichtung 29 und den Spannungswandler) die gleichen wie in den Figuren 3a, 3b, 3c und tragen die gleichen Bezugszeichen. Der in den Figuren 4a, 4b, 4c zusätzlich vorhandene Spannungswandler oder Booster 30 erhöht die Eingangsspannung auf eine höhere Ausgangsspannung mittels üblicher Verfahren (z.B. Zerhacker, Transformator, Gleichrichter). Der Booster kann über einen Doppelschalter 32 in den Stromkreis geschlossen werden. Der Doppelschalter 32 lässt drei Schaltstellungen zu, nämlich beide Schalter offen oder einer von beiden geschlossen. Nicht zulässig ist eine Schaltstellung, bei der beide Schalter geschlossen sind. In Figur 4a ist der Elektromotor 24 nicht angeschlossen, so dass sich der Rotor nicht dreht bzw. im Freilauf ist. In Figur 4b befindet sich der Elektromotor 24 in normalem Antriebsmodus und wird von den Akkumulatorelementen 28 mit Strom versorgt, was durch die fett gekennzeichneten Linien dargestellt wird. Beim Weiterdrehen des Elektromotors 24 wird die Schaltvorrichtung 26 entsprechend umgestellt, so dass die 3 Spulen alternierend mit Strom versorgt werden. In Figur 4c ist die Bremsphase oder Rückspeisungsphase dargestellt, bei der dem Elektromotor 24 Energie entzogen und den Akkumulatorelementen 28 zugeführt wird. Dabei befindet sich der Doppelschalter 32 in einer Schaltstellung, dass die vom Elektromotor 24 über die Schaltvorrichtung 26 anliegende Spannung am rechten Eingang des Boosters 30 auf eine am linken Ausgang anliegende höhere Spannung erhöht wird, so dass die Akkumulatorelemente 28 mit einer höheren Ladespannung geladen werden.

In den Figuren 4a, 4b, 4c ist der Elektromotor 24 als lediglich mit drei Spulen bestückt dargestellt. Um eine möglichst gezielte Steuerung bzw. Beschleunigung und Abbremsung zu erreichen, ist es zweckmäßig, einen Motor mit einer hohen Polzahl zu verwenden, insbesondere mindestens achtzehn Spulen und vierundzwanzig Polen bzw. zwölf Spulen und vierzehn Polen. Ein derartiger Elektromotor 24 zur Ansteuerung eines derartigen Vektorpropellers besitzt eine höhere Leistung als ein Motor für eine konstante Drehzahl. Je stärker der Elektromotor ausgebildet ist, umso höher kann die Drehzahländerung ausfallen, insbesondere, wenn die Beschleunigungs- und Bremsphasen in eine Umdrehung fallen. Dies bedeutet einen größeren Regelbereich für den Vektorpropeller.

In Figur 4b ist ein Betriebszustand dargestellt, bei dem eine Spule UV des Elektromotors 24 in einem normalen Betriebszustand mit den Akkumulatorenelementen 28 derart verbunden ist, dass der Elektromotor 24 angetrieben wird. Der Stromfluss ist durch verdickte Linien dargestellt. Dazu ist je ein Schalter von U und V der Schaltvorrichtung 26 in der geschlossenen Stellung. Ferner befindet sich einer der beiden Schalter des Doppelschalters 32, nämlich derjenige, welcher den Spannungswandler 30 überbrückt, im offenen Zustand. Wenn sich der auf diese Weise angetriebene Elektromotor 24 weiter bewegt und eine der beiden anderen Spulen UW bzw. WV in den Wirkungsbereich gelangen, werden die entsprechenden Schalter U, V, W der Schaltvorrichtung 26 entsprechend umgeschaltet. Die Schaltstellung des Doppelschalters 32 bleibt dabei unverändert.

In Figur 4c ist eine Stellung dargestellt, in der der Booster 30 mit den normalen Akkumulatorenelementen 28 in Reihe geschaltet ist. Dadurch wird die Generatorspannung beim Bremsen angehoben, so dass alle in Serie geschalteten Akkumulatorenelemente 28 geladen werden können.

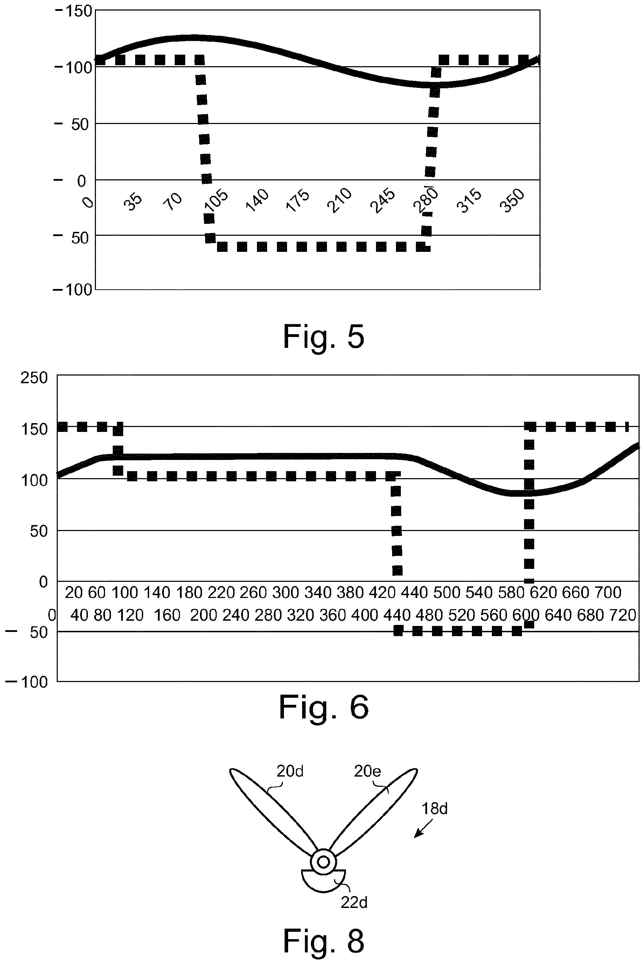

In Figur 5 sind zwei Diagramme dargestellt, in denen eine Motor- oder Antriebsleistung in gestrichelter Linie sowie eine sich daraus ergebende Rotordrehzahl mit durchgezogener Linie über dem Drehwinkel über einer Umdrehung (0°-360°) in Grad dargestellt sind. Die Abszisse zeigt den Drehwinkel in Grad an, die Ordinate die Drehzahl bzw. Leistung. 100 entspricht 100 % der Motorleistung bzw. Nenndrehzahl. 360° entspricht einer vollen Umdrehung. In dem dargestellten Beispiel wird ein Antriebsmotor bis zu einem Drehwinkel von 90° mit voller Leistung angetrieben mit der Folge, dass die Drehzahl von 100 % auf ca. 115 - 130 % steigt. Anschließend wird bis zu 270° Drehwinkel der Elektromotor im Generatorbetrieb betrieben, also -50 % Leistung entnommen, sodass sich dementsprechend die Drehzahl auf einen Wert von 70-90% der normalen Drehzahl reduziert. Zwischen 270° und 360° erfolgt erneut ein Antrieb, sodass die Drehzahl wiederum steigt. Sofern keine gezielte Beeinflussung der Kraftrichtung erfordert wird, dreht sich der Vektorpropeller mit konstanter Drehzahl.

Von +270° bis +90° wird der Vektorpropeller beschleunigt und dem Elektromotor muss Leistung zugeführt werden. Von +90° bis +270°wird der Vektorpropeller gebremst. Der Motor wirkt als Generator und speist Energie in die Akkumulatoren zurück. Wenn die Drehzahl der Propeller extrem gebremst werden muss, wird der Elektromotor gegenpolig am Akkumulator angeschlossen. Die Gesamtbilanz der Leistung kann pro Umdrehung nicht null werden, da Leistung für den Gesamtschub benötigt wird.

Bei dem in Figur 5 dargestellten Ausführungsbeispiel fällt die Beschleunigungsphase sowie die Bremsphase in eine Umdrehung des Rotors 18. In Figur 6 ist eine alternative Ansteuerung dargestellt, bei der die Beschleunigungsphase und die Bremsphase in zwei aufeinanderfolgende Umdrehungen fallen, so dass ein Durchlauf nach 720° erreicht wird. Die Abszisse zeigt wiederum den Winkel in Grad an, die Ordinate die Drehzahl bzw. Leistung. In diesem Beispiel wird bis zu einem Winkel von 90° beschleunigt, dann bis zu 450° der Motor mit einer vorgegebenen Normalleistung angetrieben und bei 450°, d.h. 90°+ 360° erfolgt bis 630° (270°+360°) ein Abbremsen.

In Figur 7 ist eine weitere Ausführungsform eines Luftfahrzeugs 10b perspektivisch dargestellt, das im wesentlichen dem von Figur 1 ähnelt, aber sich zum einen durch unterschiedliche Stützen 14 aber wesentlich dadurch unterscheidet, dass zwei asymmetrische Rotoren 18b, 18c oberhalb und unterhalb des Rumpfes 12 angeordnet sind, bei denen die Rotorblätter 20b, 20c jeweils einen Knick 31b, 31c aufweisen, sodass die jeweils äußeren Rotorblattabschnitte 32b, 32c in einem Winkel α zur Rotationsebene der inneren Abschnitte 21b, 21c der Rotorblätter ausgerichtet sind, derart, dass die Verlängerungen der Mittelachsen M der äußeren Rotorblattabschnitte 32b, 32c sich im Schwerpunkt des Luftfahrzeugs 10b schneiden. Auf diese Weise erzeugen diese äußeren Rotorblattabschnitte 32b, 32c Kraftkomponenten senkrecht zu diesen Mittelachsen M. Da die beiden äußeren Rotorblattabschnitte 32b, 32c jeweils nach außen, das heißt, das untere nach unten und das obere nach oben geknickt sind, wirken die dadurch erzeugten radialen Kraftkomponenten gegeneinander. Im jetzt dargestellten Ausführungsbeispiel wirkt die vom oberen äußeren Rotorblattabschnitt 32b erzeugte Kraft nach radial außen, während die vom unteren äußeren Rotorblattabschnitt 32c erzeugte Kraft nach radial innen wirkt. Beides hat zur Folge, dass die Rotoren ein höheres Drehmoment erzeugen, um das Luftfahrzeug um die Quer- oder Längsachse zu drehen.

Die in Figur 7 dargestellten Rotoren 18b und 18c haben jeweils durchgehende Rotorblätter 20b, 20c, die sich vom jeweiligen Drehpunkt aus nach außen erstrecken. Es wäre im Rahmen der Erfindung alternativ auch möglich, einen Teil der inneren Rotorblattabschnitte 21b, 21c oder diese komplett durch Haltestangen ohne Auftriebsfunktion zu ersetzen, sodass nur in den äußeren Rotorblattabschnitten 32b, 32c Auftrieb erzeugt wird.

In Figur 8 ist eine alternative Ausführungsform eines Rotors 18d dargestellt, welche zwei in einem spitzen Winkel zueinander stehende Rotorblätter 20d und 20e aufweist. Vorzugsweise beträgt dieser Winkel zwischen 30° und 120°. Zur Kompensation der Fliehkräfte der beiden Rotorblätter 20d und 20e weist auch der Rotor 18d mindestens ein Ausgleichsgewicht 22d auf. Ein derartiger Rotor kann bei jeder der hier dargestellten Ausführungsformen von Fahrzeugen, insbesondere der Ausführungsform der Figuren 1, 2 und 7 zur Anwendung gelangen. Diese Ausführungsform hat den Vorteil, dass über die zwei Rotorblätter eine vergrößerte Auftriebskraft erzeugt werden kann, die derjenigen eines herkömmlichen symmetrischen Rotorblatts entspricht, die in Figur 1 mit dem Bezugszeichen 16 versehen ist.

Als Sensor zur Erfassung der Position des Rotors 18b in Fig. 7 kann ein einfacher Drucksensor 33 angebracht sein, der beispielsweise wie ein übliches Mikrofon funktioniert und den Durchgang des Rotorblattes 20c durch die plötzliche Druckerhöhung erfasst. Es können alternativ auch mehrere Drucksensoren 33 über dem Umfang verteilt angeordnet sein. Derartige Drucksensoren 33 können natürlich auch bei den anderen Ausführungsformen der Luftfahrzeuge zur Anwendung gelangen.

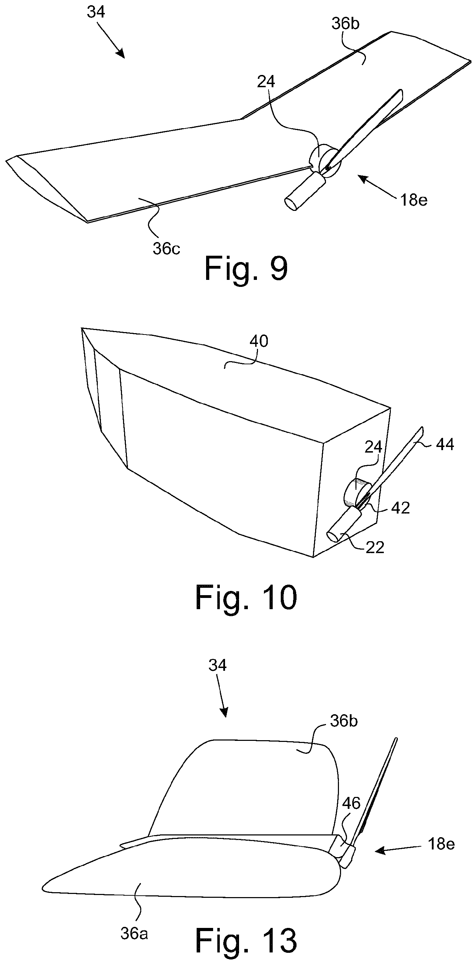

In Figur 9 ist ein Luftfahrzeug 34 schematisch dargestellt, welches im Wesentlichen nur aus zwei Tragflügeln 36a, 36b (sowie einem nicht dargestellten dazwischenliegenden Rumpf) besteht und mittels eines Rotors 18e angetrieben wird, der mittels eines vorbeschriebenen Antriebssystems angetrieben wird, so dass im Extremfall weitere Steuerflächen nicht benötigt werden, bzw. Steuerflächen kleiner ausgebildet werden können und damit leichter werden. Dies ist besonders vorteilhaft für baulich einfache Drohnen.

In Figur 10 ist ein Wasserfahrzeug 40 schematisch dargestellt, welches mittels einer Schiffsschraube 42 angetrieben ist, die die gleiche Form aufweist, wie die oben beschriebenen Rotoren 18. Im Inneren des Wasserfahrzeugs 40 befinden sich die gleichen Bauteile, die im Rumpf 12 der oben beschriebenen Luftfahrzeuge untergebracht sind, also insbesondere Akkumulatoren, Umschalter und ein Elektromotor. Durch entsprechende Beschleunigung bzw. Abbremsung des einzelnen Schraubenblattes 44 der Schiffsschraube 42, sodass die Punkte größter Geschwindigkeit bzw. niedrigster Geschwindigkeit auf der linken bzw. rechten Seite des Schriftschiffsrumpfes liegen, lässt sich das Wasserfahrzeug 40 damit nach rechts oder links steuern.

Obwohl die Erfindung im Detail durch bevorzugte Ausführungsbeispiele näher illustriert und erläutert wurde, so ist die Erfindung nicht durch die offenbarten Beispiele eingeschränkt und andere Variationen können vom Fachmann hieraus abgeleitet werden, ohne den Schutzumfang der Erfindung zu verlassen. Es ist daher klar, dass eine Vielzahl von Variationsmöglichkeiten existiert. Es ist ebenfalls klar, dass beispielhaft genannte Ausführungsformen wirklich nur Beispiele darstellen, die nicht in irgendeiner Weise als Begrenzung etwa des Schutzbereichs, der Anwendungsmöglichkeiten oder der Konfiguration der Erfindung aufzufassen sind. Vielmehr versetzen die vorhergehende Beschreibung und die Figurenbeschreibung den Fachmann in die Lage, die beispielhaften Ausführungsformen konkret umzusetzen, wobei der Fachmann in Kenntnis des offenbarten Erfindungsgedankens vielfältige Änderungen beispielsweise hinsichtlich der Funktion oder der Anordnung einzelner, in einer beispielhaften Ausführungsform genannter Elemente vornehmen kann, ohne den Schutzbereich zu verlassen, der durch die Ansprüche und deren rechtliche Entsprechungen, wie etwa weitergehenden Erläuterungen in der Beschreibung, definiert wird.

Die Figuren 11a und 11b zeigen zwei Stellungen eines Fahrzeugs mit Antriebssystem und einem Gelenk 46 zwischen der aus Elektromotor 24 und asymmetrischem Rotorblatt 18 bestehenden Antriebseinheit und dem Rumpf 12 eines Luftfahrzeugs. Das Gelenk 46 kann als einachsiges oder zweiachsiges Gelenk ausgeführt sein. Bei einer Ausbildung als einachsiges Gelenk 46 wird eine Rotation um eine Achse, insbesondere einer Querachse zugelassen, bei einem zweiachsigen Gelenk 46 wird wie bei einem Kugel- oder Kardangelenk eine Kippbewegung um zwei Rotationsachsen zugelassen. In Figur 11a ist die Achse des Rotorblattes 18 vertikal wie bei den Ausführungen gemäß der Figuren 1 und 2, d.h. bei Rotation ohne Abbrems- und Beschleunigungsphasen. In Figur 11b ist ein Zustand mit Abbrems- und Beschleunigungsphasen dargestellt. Durch das Gelenk 46 kann der Rumpf 12 ganz oder teilweise in seiner ursprünglichen Lage (Figur 11a) gehalten werden, während über die gekippte Drehachse des Rotorblattes 18 eine Kraftkomponente in der Kipprichtung, also im Beispiel von Figur 11b, in Horizontalrichtung nach links erzeugt. Das Gelenk 46 kann frei beweglich angeordnet sein oder über elastische Rückstellmittel in Form von Federn o.ä. verfügen, welche eine gewisse rückstellende Kraftwirkung in Richtung der Grundstellung (Figur 11a) erzeugen.

In Figur 12 ist ein Gelenk 46, das als Kreuzgelenk ausgebildet ist, perspektivisch dargestellt.

In Figur 13 ist das in Figur 9 gezeigte Flugzeug mit einem Gelenk 46 ausgestattet und perspektivisch dargestellt, wobei in der gezeigten Stellung durch Abbrems- und Beschleunigungsphasen die Rotorachse nach schräg unten geneigt ist, wodurch eine Kraft nach unten vorne erzeugt wird. Hierdurch kann der Drehradius des Flugzeugs verkleinert werden bzw. bei Ausbildung als Drohne kann auf entsprechende bewegbare Ruder wie Höhen- oder Seitenruder verzichtet werden, was zu einer baulichen Vereinfachung führt. Eine solche Anordnung kann natürlich in gleicher Weise bei einem Wasserfahrzeug gemäß Figur 10 zur Anwendung gelangen, wodurch Steuerruder kleiner ausgebildet oder weg gelassen werden können.

### Bezugszeichen

- 10a, 10b: Luftfahrzeug
- 12: Rumpf
- 14: Stützen
- 16: symmetrischer Rotor
- 18, 18a, b, c, d, e: asymmetrischer Rotor, Vektorpropeller
- 20, 20b, c, d, e: Rotorblatt
- 21b, 21c: innere Rotorblattabschnitte
- 22, 22d: Ausgleichsgewicht
- 24: Elektromotor
- 26: erste Schaltvorrichtung
- 28: Akkumulatenelemente
- 29: zweite Schaltvorrichtung
- 30: Spannungswandler/Booster
- 31b, c: Knick
- 32: Doppelschalter
- 32b, c: äußere Rotorblattabschnitte
- 33: Drucksensor
- 34: Luftfahrzeug
- 36a, b: Tragflügel
- 40: Wasserfahrzeug
- 42: Schiffsschraube
- 44: Schraubenblatt46 Gelenk

- M: Mittelachsen

## Patentansprüche

1. Antriebssystem für ein Fahrzeug, umfassend mindestens einen asymmetrischen Rotor (18), der mindestens ein von einer Rotorachse radial sich erstreckendes Rotorblatt (20) und ein bezüglich der Rotorachse gegenüberliegendes Ausgleichsgewicht (22) aufweist, ferner umfassend eine Ansteuervorrichtung für den Elektromotor (24), die den Elektromotor (24) mit einem Akkumulatorelement (28) zu dessen Energieversorgung verbindet und eingerichtet und ausgebildet ist, während eines Umlaufzyklusses, welcher 1-3 Umläufe des steif ausgebildeten Rotorblattes (20) umfasst, mindestens eine Beschleunigungsphase, in welcher der Elektromotor (24) zur Beschleunigung des Rotors (18) beschleunigbar ist und mindestens eine Bremsphase, in welcher der Elektromotor (24) bremsbar ist, zu bewirken, wobei die Ansteuervorrichtung ausgebildet ist, mindestens während eines Teils der Bremsphase den Elektromotor (24) im Generatorbetrieb mit mindestens einem Akkumulatorelement (28) zu verbinden.

2. Antriebssystem nach Anspruch 1, **dadurch gekennzeichnet, dass** der Akkumulator mindestens zwei Akkumulatorelemente (28) und eine Akkumulator-Beschaltungsvorrichtung (26) umfasst, um jedes Akkumulatorelement (28) einzeln zu beschalten.

3. Antriebssystem nach Anspruch 2, **dadurch gekennzeichnet, dass** die Beschaltungsvorrichtung (26) eingerichtet ist, die Akkumulatorelemente (28) zyklisch zu beschalten.

4. Antriebssystem nach einem der Ansprüche 2 oder 3, **dadurch gekennzeichnet, dass** die Beschaltungsvorrichtung (26) eingerichtet ist, die Akkumulatorelemente (28) in der Beschleunigungsphase in Reihe zu schalten.

5. Antriebssystem nach Anspruch 1, **dadurch gekennzeichnet, dass** dieses einen die Spannung erhöhenden Spannungswandler (30) umfasst, der in der Bremsphase in den Spannungskreislauf schaltbar ist und die Ladespannung der Akkumulatorelemente (28) erhöht.

6. Luftfahrzeug, umfassend mindestens ein Antriebssystem nach einem der Ansprüche 1 bis 5.

7. Luftfahrzeug nach Anspruch 6, **dadurch gekennzeichnet, dass** dieses ein Tragflügler ist.

8. Luftfahrzeug nach Anspruch 6 oder 7, **dadurch gekennzeichnet, dass** dieses mindestens ein zweites Antriebssystem mit einem herkömmlichen Mehrblatt-Rotor (16) umfasst.

9. Luftfahrzeug nach Anspruch 6 oder 7, **dadurch gekennzeichnet, dass** dieses zwei Antriebssysteme nach einem der Ansprüche 1 bis 5 umfasst, wobei deren zwei Rotoren (18b, 18c) gegensätzlich drehen und deren zwei Ansteuervorrichtungen die jeweiligen Beschleunigungsphasen und Bremsphasen der beiden Rotoren (18b, 18c) derart gleichphasig ansteuern, dass sich die Drehmomente im Wesentlichen aufheben.

10. Luftfahrzeug nach Anspruch 6 oder 7, **dadurch gekennzeichnet, dass** dieses zwei Antriebssysteme nach einem der Ansprüche 1 bis 6 umfasst, wobei deren zwei Rotoren (18b, 18c) gegensätzlich drehen und deren zwei Ansteuervorrichtungen die jeweiligen Beschleunigungsphasen und Bremsphasen der beiden Rotoren (18b, 18c) derart ansteuern, dass die Bremsenergie eines Rotors mindestens teilweise für das Beschleunigen des anderen Rotors verwendet wird.

11. Luftfahrzeug nach einem der Ansprüche 6 bis 10, **dadurch gekennzeichnet, dass** mindestens ein Teil des Rotorblattes (20) aus der Rotationsebene weg vom Schwerpunkt des Luftfahrzeugs in einem Knickwinkel von mehr als 10° geknickt ist um eine radiale Schubkomponente zu erzeugen.

12. Wasserfahrzeug (40), umfassend mindestens ein Antriebssystem nach einem der Ansprüche 1 bis 5.

13. Wasserfahrzeug (40) nach Anspruch 12, **dadurch gekennzeichnet, dass** mindestens ein Teil des Rotorblattes (20) aus der Rotationsebene in einem Knickwinkel von mehr als 10 Grad geknickt ist.

14. Fahrzeug nach einem der Ansprüche 6 bis 13, **dadurch gekennzeichnet, dass** eine Fixierung des Elektromotors (24) an einem Strukturbauteil (12) des Fahrzeugs über ein Gelenk (46) erfolgt.

15. Fahrzeug nach Anspruch 14, **dadurch gekennzeichnet, dass** das Gelenk (46) als 2-achsiges Kreuzgelenk ausgebildet ist.

## Claims

1. A drive system for a vehicle, comprising at least one asymmetrical rotor (18), which has at least one rotor blade (20) extending radially from a rotor axis and a counterweight (22) lying opposite relative to the rotor axis, further comprising an actuating device for the electric motor (24), which connects the electric motor (24) with an accumulator element (28) to supply it with power, and, during a circulating cycle comprising 1-3 circulations of the rigidly designed rotor blade (20), is set up and designed to initiate at least one acceleration phase, in which the electric motor (24) can be accelerated for accelerating the rotor (18), and at least one brake phase, in which the electric motor (24) can be braked, wherein the actuating device is designed to connect the electric motor (24) with at least one accumulator element (28) in the generator mode during at least part of the braking phase.

2. The drive system according to claim 1, **characterized in that** the accumulator comprises at least two accumulator elements (28) and an accumulator wiring device (26), so as to individually wire each accumulator element (28).

3. The drive system according to claim 2, **characterized in that** the wiring device (26) is set up to cyclically wire the accumulator elements (28).

4. The drive system according to one of claims 2 or 3, **characterized in that** the wiring device (26) is set up to wire the accumulator elements (28) in series in the acceleration phase.

5. The drive system according to claim 1, **characterized in that** the latter comprises a voltage-increasing voltage transformer (30), which in the braking phase can be switched into the voltage circuit and elevates the charging voltage of the accumulator elements (28).

6. An aircraft, comprising at least one drive system according to one of claims 1 to 5.

7. The aircraft according to claim 6, **characterized in that** it is a helicopter.

8. The aircraft according to claim 6 or 7, **characterized in that** it comprises at least one second drive system with a conventional multiblade rotor (16).

9. The aircraft according to claim 6 or 7, **characterized in that** it comprises two drive systems according to one of claims 1 to 5, wherein its two rotors (18b, 18c) rotate in opposite directions, and its two actuating devices actuate the respective accelerating phases and braking phases of the two rotors (18b, 18c) in phase in such a way that the torques essentially cancel each other out.

10. The aircraft according to claim 6 or 7, **characterized in that** it comprises two drive systems according to one of claims 1 to 6, wherein its two rotors (18b, 18c) rotate in opposite directions and its two actuating devices actuate the respective accelerating phases and braking phases of the two rotors (18b, 18c) in such a way that the braking energy of one rotor is at least partially used for accelerating the other rotor.

11. The aircraft according to one of claims 6 to 10, **characterized in that** at least one part of the rotor blade (20) is bent out of the rotational plane away from the center of gravity of the aircraft at a bending angle of more than 10° so as to generate a radial thrust component.

12. A watercraft (40), comprising at least one drive system according to one of claims 1 to 5.

13. The watercraft (40) according to claim 12, **characterized in that** at least a part of the rotor blade (20) is bent out of the rotational plane at a bending angle of more than 10 degrees.

14. The vehicle according to one of claims 6 to 13, **characterized in that** the electric motor (24) is fixed on a structural component (12) of the vehicle via a hinge (46).

15. The vehicle according to claim 14, **characterized in that** the hinge (46) is designed as a 2-axis universal joint.

## Revendications

1. Système d'entraînement pour un véhicule, comprenant au moins un rotor asymétrique (18), qui comporte au moins une pale de rotor (20) s'étendant radialement depuis un axe de rotor et un contrepoids d'équilibre (22) opposé par rapport à l'axe de rotor, comprenant en plus un dispositif de commande pour le moteur électrique (24), qui relie le moteur électrique (24) à un élément d'accumulateur (28) et est agencé et constitué pour l'alimentation en énergie de celui-ci, pendant un cycle de rotation, lequel comprend 1-3 rotations de la pale de rotor (20) constituée rigide, pour actionner au moins une phase d'accélération dans laquelle le moteur électrique (24) peut être accéléré pour l'accélération du rotor (18) et au moins une phase de freinage dans laquelle le moteur électrique (24) peut être freiné, sachant que le dispositif de commande est constitué pour relier au moins pendant une partie de la phase de freinage le moteur électrique (24) en fonctionnement de générateur à au moins un élément d'accumulateur (28).

2. Système d'entraînement selon la revendication 1, **caractérisé en ce que** l'accumulateur comprend au moins deux éléments d'accumulateur (28) et un dispositif de commutation (26) pour commuter individuellement chaque élément d'accumulateur (28).

3. Système d'entraînement selon la revendication 2, **caractérisé en ce que** le dispositif de commutation (26) est agencé pour commuter de façon cyclique les éléments d'accumulateur (28).

4. Système d'entraînement selon l'une quelconque des revendications 2 ou 3, **caractérisé en ce que** le dispositif de commutation (26) est agencé pour connecter en série les éléments d'accumulateur (28) dans la phase d'accélération.

5. Système d'entraînement selon la revendication 1, **caractérisé en ce que** celui-ci comprend un transformateur de tension (30) augmentant la tension, qui peut être connecté dans la phase de freinage dans le circuit de tension et augmente la tension de charge des éléments d'accumulateur (28).

6. Aéronef comprenant au moins un système d'entraînement selon l'une quelconque des revendications 1 à 5.

7. Aéronef selon la revendication 6, **caractérisé en ce que** celui-ci est un autogire.

8. Aéronef selon la revendication 6 ou 7, **caractérisé en ce que** celui-ci comprend au moins un deuxième système d'entraînement avec un rotor à pales multiples traditionnel (16).

9. Aéronef selon la revendication 6 ou 7, **caractérisé en ce que** celui-ci comprend deux systèmes d'entraînement selon l'une quelconque des revendications 1 à 5, sachant que les deux rotors de ceux-ci (18b, 18c) tournent dans le sens opposé et les deux dispositifs de commande de ceux-ci commandent les phases d'accélération et de freinage respectives des deux rotors (18b, 18c) en équilibre de phase de telle manière que les couples s'équilibrent pour l'essentiel.

10. Aéronef selon la revendication 6 ou 7, **caractérisé en ce que** celui-ci comprend deux systèmes d'entraînement selon l'une quelconque des revendications 1 à 6, sachant que les deux rotors de ceux-ci (18b, 18c) tournent dans le sens opposé et les deux dispositifs de commande de ceux-ci commandent les phases d'accélération et de freinage respectives des deux rotors (18b, 18c) de telle manière que l'énergie de freinage d'un rotor est utilisée au moins en partie pour l'accélération de l'autre rotor.

11. Aéronef selon l'une quelconque des revendications 6 à 10, **caractérisé en ce qu'**au moins une partie de la pale de rotor (20) est infléchie depuis le plan de rotation éloigné du centre de gravité de l'aéronef dans un angle d'inflexion de plus de 10° pour produire une composante de poussée radiale.

12. Embarcation (40) comprenant au moins un système de commande selon l'une quelconque des revendications 1 à 5 .

13. Embarcation (40) selon la revendication 12, **caractérisé en ce qu'**au moins une partie de la pale de rotor (20) est infléchie depuis le plan de rotation dans un angle d'inflexion de plus de 10 degrés.

14. Véhicule selon l'une quelconque des revendications 6 à 13, **caractérisé en ce qu'**une fixation du moteur électrique (24) a lieu sur un composant structural (12) du véhicule par le biais d'une articulation (46).

15. Véhicule selon la revendication 14, **caractérisé en ce que** l'articulation (46) est constituée comme un joint de cardan à 2 axes.
